Europäisches Patentamt

European Patent Office

Office européen des brevets

(11) Numéro de publication: **0 378 955 B1**

## (12) FASCICULE DE BREVET EUROPEEN

(45) Date de publication de fascicule du brevet: **23.03.94**    (51) Int. Cl.$^5$: **C08J 5/18**, C08J 7/04

(21) Numéro de dépôt: **89420522.8**

(22) Date de dépôt: **27.12.89**

Jointe à la demande no. 90900884.9/0451180
(numéro de dépôt/numéro de publication de la
demande européenne) par décision du 06.04.92.

(54) **Films polyester leur utilisation pour l'obtention de films composites et films composites en résultant.**

(30) Priorité: **28.12.88 FR 8817561**

(43) Date de publication de la demande:
**25.07.90 Bulletin 90/30**

(45) Mention de la délivrance du brevet:
**23.03.94 Bulletin 94/12**

(84) Etats contractants désignés:
**AT BE CH DE ES FR GB GR IT LI LU NL SE**

(56) Documents cités:
**EP-A- 0 099 839
FR-A- 1 471 017
GB-A- 2 177 045
US-A- 3 256 379**

**C.R. OSWIN: "Plastic films and packaging",
1975, pages 113-114,108-109, Applied Science, Londres, GB**

(73) Titulaire: **RHONE-POULENC FILMS
25, quai Paul Doumer
F-92408 Courbevoie(FR)**

(72) Inventeur: **Buisine, Abel
2, Avenue Pasteur
Saint-Maurice-de-Beynost
F-01700 Miribel(FR)**
Inventeur: **Corsi, Philippe
La Duchère
336 C Balmont-Ouest
F-69009 Lyon(FR)**
Inventeur: **Eyraud Marcel
7,rue des Noyers
F-69005 Lyon(FR)**

(74) Mandataire: **Vignally, Noel et al
Rhône-Poulenc Chimie
Direction de la Propriété Industrielle
Centre de Recherches des Carrières
B.P. 62
F-69192 Saint-Fons Cédex (FR)**

EP 0 378 955 B1

**Description**

La présente invention a pour objet de nouveaux films polyester pouvant être utilisés notamment pour la préparation, par extrusioncouchage, de films composites comportant sur au moins une des faces du film polyester une couche d'un polymère oléfinique ainsi que les films composites qui en résultent.

Les films composites comportant une couche de polyester semi-cristallin orienté et, sur au moins une face, une couche d'un polymère oléfinique et en particulier de polyéthylène, sont utilisés dans le domaine de l'emballage comme bande de scellage pour assurer l'étanchéité de nombreux récipients destinés à contenir des liquides (lait, jus de fruits, vins). Le brevet FR-A-1471017 a proposé de réaliser des films de polyester enduit scellables thermiquement par enduction en ligne, entre l'étirage longitudinal et l'étirage transversal du polyester, d'un polymère oléfinique en solution ou à l'état fondu. Ce procédé ne peut être utilisé que par les fabricants de films polyester et non par les transformateurs ultérieurs de ces films. Par ailleurs, il procure de faibles forces de délaminage et il semble peu adapté à l'enduction des 2 faces du film polyester.

Le procédé de fabrication de ces films composites le plus intéressant industriellement consiste à réaliser l'extrusion d'un polymère oléfinique fondu sur au moins une face d'un film polyester semi-cristallin orienté défilant à proximité de la filière d'extrusion du polymère oléfinique ; ce procédé est généralement désigné par l'expression "procédé d'extrusion-couchage". Le film composite qui résulte du dépôt du polymère oléfinique sur le support polyester est ensuite refroidi par exemple par placage de la face polyoléfinique à la surface d'un tambour de refroidissement. Pour l'obtention de films composites comportant un revêtement polyoléfinique sur chaque face du film polyester support, dénommés ci-après "films composites couchés double-face", le film complexe résultant de la première étape d'extrusion-couchage est soumis après refroidissement à une nouvelle opération identique sur la face polyester non revêtue.

En dépit de l'intérêt qu'il présente le procédé d'extrusion couchage souffre de l'inconvénient de conduire à des films composites présentant diverses anomalies au regard de la liaison polymère oléfinique/support polyester. Ainsi, on a constaté que la force de délaminage (c'est-à-dire la force nécessaire pour rompre la liaison entre le revêtement polyoléfinique et le film support) varie, lors du délaminage, entre des valeurs extrêmes de part et d'autre d'une valeur moyenne. Cette fluctuation de la force de délaminage rend sa détermination aléatoire et imprécise et nuit à l'intérêt industriel et commercial des films composites. Il a été constaté qu'elle peut affecter les deux couches de revêtement polyoléfiniques lorsque le film support a fait l'objet d'une double extrusion-couchage et qu'elle peut se manifester quelle que soit la valeur moyenne de la force de délaminage.

Les études conduites par la demanderesse ont en outre permis d'établir que dans le cas de films polyester support soumis à une double extrusion-couchage, la force de délaminage de la couche résultant de la deuxième extrusion-couchage est inférieure à la force de délaminage de la couche polyoléfinique mise en place sur l'autre face du film polyester lors de la première phase d'extrusion-couchage et peut prendre des valeurs inférieures à la valeur minimale exigée pour certaines applications dans le domaine de l'emballage c'est-à-dire une valeur inférieure à 200 g/10 mm.

Sans que la présente invention soit limitée par l'explication de la cause de ces anomalies, il apparaît qu'elles trouvent leur source dans le choc thermique subi par le support polyester lors de l'extrusion-couchage. En effet, lors de la mise en place du revêtement polyoléfinique, le film polyester support est mis en contact avec le polymère oléfinique porté à une température de l'ordre de 280 à 330°C, en fonction de la nature de ce dernier et/ou des conditions de l'extrusion-couchage, puis il est refroidi à température ambiante. Le cas échéant, le film polyester support est soumis à un deuxième choc thermique lors de la mise en place sur sa deuxième face d'un autre revêtement polyoléfinique. L'élévation brutale de la température du film peut provoquer des modifications de sa structure qui peuvent être à l'origine des anomalies constatées. En particulier il apparaît que les fluctuations rapides et plus ou moins importantes de la force de délaminage sont dues à une variation des dimensions du film support à température supérieure à 200°C et notamment à un retrait dans le sens travers trop important à cette température.

Le problème se posait donc de mettre à la disposition de l'industrie un film polyester orienté semi-cristallin susceptible d'être utilisé pour l'obtention de films composites par extrusion-couchage de polymères polyoléfiniques, exempt des inconvénients précités et la présente invention se propose précisément d'apporter une solution à ce problème.

Un premier objectif poursuivi par la présente invention réside dans la solution du problème posé par la variation importante et rapide de la force de délaminage du revêtement polyoléfinique au cours du délaminage.

Un deuxième objectif poursuivi par la présente invention réside dans la solution du problème posé par la faible valeur de la force de délaminage du deuxième revêtement polyoléfinique mis en place sur un film polyester support par extrusion-couchage.

Plus spécifiquement, la présente invention a pour objet des films polyester semi-cristallins orientés, utilisables notamment pour la fabrication de films composites par extrusion-couchage de polymères oféfiniques, caractérisés en ce qu'ils présentent un coefficient d'orientation planaire Δp supérieur ou égal 165 x 10$^{-3}$ et un taux de retrait travers à 200°C inférieur ou égal à 2,7 %.

On a constaté de façon surprenante que des films polyester présentant un taux de retrait travers inférieur ou égal à 2,7 % et de préférence inférieur ou égal à 2,6 % ne donnent pratiquement plus lieu ou seulement avec une faible amplitude au phénomène de fluctuation rapide de la force de délaminage de la ou des couche(s) de revêtement polyoléfinique et que des films polyester dont le coefficient d'orientation planaire Δp est supérieur ou égal à 165 x 10$^{-3}$ présente une valeur élevée de la force de délaminage de la couche de revêtement polyoléfinique déposée sur sa deuxième face au cours d'une extrusion-couchage double-face. En particulier des films polyester support conformes à l'invention permettent d'obtenir des films composites avec au moins un revêtement polyoléfinique dont la fluctuation de la force de délaminage est inférieure ou égale à 20 %, de préférence à 15 % et plus préférentiellement encore à 5 % de part et d'autre de sa valeur moyenne, et dont la valeur moyenne de la force de délaminage de la deuxième couche de revêtement polyoléfinique dans le cas d'une extrusion-couchage double-face est supérieure ou égale à 200 g/10 mm.

Au sens de la présente invention on désigne par taux de retrait thermique travers, la variation de dimension du film dans le sens perpendiculaire à la direction d'étirage longitudinal, rapportée à sa dimension initiale, à la température de 200°C.

L'orientation planaire du film désigne l'orientation des noyaux benzéniques présents dans les chaînes du polyester par rapport au plan du film. L'orientation planaire d'un film est exprimée au moyen du coefficient d'orientation planaire conformément à l'expression :

$$\Delta P = \frac{n1 + n2}{2} - n3 \qquad (1)$$

dans laquelle :
- n1 est l'indice de réfraction dans la direction d'orientation principale ;
- n2 est l'indice de réfraction dans une direction perpendiculaire à la direction d'orientation principale, dans le plan du film ;
- n3 est l'indice de réfraction selon une direction perpendiculaire au plan du film.

Les indices de réfraction n1, n2 et n3 sont mesurés pour la raie jaune du sodium (λ = 0,59 x 10$^{-3}$ mm).

Il n'y a pas de valeur supérieure critique du coefficient d'orientation planaire qui peut prendre toute valeur compatible avec l'obtention d'objectifs techniques. De la même façon il n'y a pas de valeur inférieure critique du taux de retrait travers.

Les polyesters utilisés pour l'obtention des films supports selon l'invention sont ceux auxquels on fait appel habituellement pour la préparation de films. Il s'agit de polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs, halogénures par exemple) et d'un ou plusieurs glycols aliphatiques. Comme exemple de diacides aromatiques, on peut citer les acides phtalique, téréphtalique, isophtalique, naphtalènedicarboxylique-2,5 ; naphtalènedicarboxylique-2,6. Ces acides peuvent être associés à une quantité mineure d'un ou plusieurs acies dicarboxyliques aliphatiques tels que les acides adipiques, azélaïque, hexahydrotéréphtalique. Comme exemples de diols aliphatiques, on peut citer l'éthylèneglycol ; le propanediol-1,3 ; le butanediol-1,4. Ces diols peuvent être associés à une quantité mineure d'un ou plusieurs diols aliphatiques plus condensés en carbone (néopentylglycol par exemple) ou cycloaliphatiques (cyclohexanediméthanol). Préférenciellement, les polyesters filmogènes cristallisables sont des polytéréphtalates d'alkylènediols et, en particulier, les polytéréphtalates d'éthylèneglycol (PET) ou de butanediol-1,4 ou des copolyesters comportant au moins 80 % en moles de motifs téréphtalate d'alkylèneglycols. Avantageusement, le polyester est un polytéréphtalate d'éthylèneglycol dont la viscosité intrinsèque mesurée à 25°C dans l'o-chlorophénol est comprise entre 0,6 et 0,75 dl/g.

Les films polyester orientés semi-cristallins conformes à la présente invention peuvent être obtenus par les procédés conventionnels de filmature. Ainsi, le film polyester amorphe résultant de l'extrusion est soumis au moins à un étirage monodirectionnel destiné à lui conférer un ensemble satisfaisant de propriétés mécaniques et de préférence à un étirage bidirectionnel effectué selon deux directions orthogonales. Dans ce dernier cas, les étirages peuvent être simultanés ou successifs. Le ou les étirages peuvent être réalisés en une seule ou en plusieurs étapes jusqu'à obtention du taux d'étirage désiré. De manière préférentielle, le film amorphe est soumis à un étirage transversal (direction perdendiculaire à la direction de la machine) l'étirage longitudinal pouvant précéder l'étirage transversal (séquence dite normale) ou le suivre (séquence dite inverse).

De manière générale, le taux d'étirage longitudinal est compris entre 3 et 5 et la température entre 80 et 120°C ; l'étirage transversal est effectué à un taux de 3 à 5 et à une température de 90 à 120°C.

Le film étiré est ensuite soumis à une thermofixation à une température comprise entre 200 et 240°C.

L'obtention des films polyester conformes à l'invention présentant les caractéristiques de ΔP et de retrait travers précisées ci-avant dépend du choix des conditions de filmature dans le cadre général exposé ci-avant : taux d'étirages, températures d'étirages, température de thermofixation.

Ainsi, de façon générale, on a constaté que le ΔP augmente quand les taux d'étirage dans le sens longitudinal et dans le sens transversal augmentent, toutes autres conditions étant par ailleurs maintenues constantes. A l'inverse, pour des taux d'étirage et une température de thermofixation donnés, le ΔP augmente lorsque les températures d'étirage diminuent. Enfin, les taux et les températures d'étirage étant fixés, il a été constaté que ΔP augmente fortement lorsque la température de thermofixation augmente jusqu'à une valeur propre à chaque polyester puis diminue au delà de cette valeur. Ainsi, dans le cas d'un polytéréphtalate d'éthylèneglycol, le ΔP augmente avec l'augmentation de la température de thermofixation jusqu'à 200 à 210°C puis décroît au-delà.

En ce qui concerne le retrait dans le sens travers, il est bien connu de l'homme de l'art qu'il diminue avec l'augmentation de la température de thermofixation. Ainsi, pour obtenir des retraits aussi faibles que possible, il est préférable de procéder à la thermofixation du film à des températures aussi élevées que possible et, en particulier, supérieures à 210°C. Il s'avère donc que les conditions de thermofixation conduisant à un ΔP élevé et à un taux de retrait faible sont incompatibles. Toutefois, le choix d'une température de thermofixation permettant d'obtenir un ΔP élevé peut être compensé par un traitement de relaxation du film après thermofixation qui permet d'augmenter la stabilité des films orientés (cf. brevet anglais GB 1.000.361 par exemple). Le traitement de relaxation consiste à soumettre le film biorienté à un traitement thermique en diminuant progressivement la tension à laquelle il est soumis. Les conditions de température, de durée et la valeur de la tension dépendent des conditions de filmature et doivent être déterminées dans chaque cas particulier afin de parvenir au taux de retrait désiré. Le traitement de relaxation du film pouvant provoquer une légère diminution du ΔP, les conditions de relaxation doivent être également choisies de façon à réaliser le meilleur compromis possible entre le ΔP et le taux de retrait.

En définitive, l'obtention des films polyester selon la présente invention passe par la sélection des conditions d'étirage, de thermofixation et de relaxation en tenant compte de la nature du polyester. Il est à la portée de l'homme de métier de faire cette sélection sans qu'il soit nécessaire d'ajouter d'autres informations à celles qui précèdent.

Le polyester soumis à la filmature peut contenir les adjuvants usuels mis en oeuvre pour l'obtention de films. Il peut s'agir de charges, d'agents antistatiques, de stabilisants par exemple.

Les films polyester selon la présente invention peuvent être pourvus sur au moins une de leur face par un revêtement primaire destiné à améliorer l'adhésion des revêtements finals d'application et notamment de revêtements polyoléfiniques. Les revêtements primaires d'adhérence peuvent être choisis parmi ceux utilisés à cet effet. On peut citer à titre d'exemples les revêtements à base de polymères acryliques, tels que ceux décrits dans les brevets français n° 1.428.831 et anglais n° 1.075.533, les copolyesters sulfonés tels que ceux décrits dans les brevets français n° 1.401.581 et 1.602.002, américain n° 4.476.189, les copolymères greffés de copolyesters sulfonés et de monomères acryliques tels que ceux décrits dans la demande européenne EP 0.260.203. Ces revêtements primaires sont déposés sur les films selon l'invention sous forme de solutions ou de dispersions aqueuses ou de solutions organiques, soit en ligne (enduction avant étirage ou entre les étirages) ou en reprise (après thermofixation). Dans le cas où les films support polyester selon l'invention sont destinés à l'extrusion-couchage de polymères oléfiniques, on fait appel à des primaires et/ou à des adhésifs à base de polyuréthannes mono ou bicomposants. L'amélioration des propriétés d'adhésion des films selon la présente invention peut encore être obtenue par traitement de la surface du film au moyen de décharges électriques (traitement corona) ou par plasma. Ces traitements peuvent également être associés au dépôt d'un primaire d'adhérence tel que ceux précités.

Bien que les films polyester selon la présente invention conviennent à de nombreuses applications, ils sont tout particulièrement bien adaptés à l'obtention de films composites comportant une couche d'un polymère filmogène et, en particulier d'un polymère oléfinique, sur au moins une de leur face, par le procédé d'extrusion-couchage. Par conséquent, la présente invention a pour deuxième objet, des films composites constitués par un film polyester, orienté semi-cristallin support comportant sur au moins une de ses faces un revêtement polyoléfinique déposé par extrusion couchage caractérisés en ce que le film polyester support présente un taux d'orientation planaire $\Delta P$ supérieur ou égal à $165 \times 10^{-3}$ et un taux de retrait travers à $200°C$ inférieur ou égal à 2,7 %.

Les films composites polyester/polyoléfines selon la présente invention sont obtenus par extrusion-couchage d'un polymère polyoléfinique sur le film polyester support selon les procédés habituels bien connus de l'homme de l'art, cf. : Kirk-Othmer Encyclopedia of Chemical Technology - vol. 6, page 421-422, 3ème édition ; ibidem vol. 10, page 237 ; Allan R. GRIFF - Plastics Extrusion Technology (1962) p. 113 à 123 : O. J. SWEETING - The Science and Technology of Polymer Films - vol. 1 (1968), pages 496 à 499. Selon ce procédé, un polymère oléfinique fondu est extrudé par une filière à fente sous forme d'une nappe portée à une température comprise entre 280 et $330°C$ (de préférence entre 300 et $320°C$) : cette nappe est déposée sur le film polyester support selon l'invention, éventuellement préchauffée à une température comprise entre 70 et $150°C$, défilant en continu à proximité de la filière. Le complexe ainsi constitué est plaqué à la surface d'un tambour de refroidissement métallique au moyen d'un rouleau presseur revêtu d'une couche d'élastomère, la couche polyoléfinique étant en contact avec le tambour de refroidissement maintenu par tout moyen approprié à une température suffisamment basse pour amener la température de la couche polyoléfinique à une valeur comprise entre 40 et $60°C$. Le film composite ainsi obtenu peut être soumis à une deuxième opération d'extrusion-couchage destinée à mettre en place sur la deuxième face du support polyester une autre couche de polymère polyoléfinique. Préalablement au passage dans la zone d'extrusion-couchage, le film polyester support est de préférence soumis à des traitements usuels destinés à améliorer la liaison entre le film polyester et les couches de revêtement polyoléfinique. Ainsi, il peut être soumis à un traitement corona et/ou au dépôt d'un primaire d'adhésion et/ou d'une couche d'adhésif par les procédés usuels d'enduction. A cet effet, on peut faire appel à des solutions organiques (par exemple, dans des esters ou des cétones aliphatiques) de polymères tels que les polyuréthannes, les polyéthylèneimines. Le film polyester support enduit est ensuite séché pour évaporer le ou les solvants et, le cas échéant, préchauffé.

La vitesse de défilement du film polyester support au cours du processus d'extrusion-couchage est en général, comprise entre 100 et 240 m/mn. La quantité de polymère oléfinique déposée sur la ou les faces du film support est calculée pour que l'épaisseur du revêtement définitif soit comprise entre 5 et 40 $\mu m$ (de préférence entre 5 et 30 $\mu m$). L'épaisseur du film polyester support est, en général, comprise entre 5 $\mu m$ et 50 $\mu m$ et, de préférence, entre 8 $\mu m$ et 40 $\mu m$.

Dans le cas où un deuxième revêtement polyoléfinique est mis en place sur la deuxième face du film polyester support, la deuxième opération d'extrusion couchage peut être réalisée immédiatement après la première ou bien après repos du film composite résultant de la première opération d'extrusion-couchage pendant une durée propre à chaque cas particulier. Il n'est, en général, pas nécessaire que cette phase de repos excède quinze jours.

Les polymères oléfiniques auxquels on peut faire appel pour l'obtention des films composites selon l'invention sont ceux habituellement mis en oeuvre pour la fabrication de films composites à support polyester destinés à l'emballage. Il s'agit essentiellement, de polymères et copolymères dérivés d' $\alpha$-oléfines et notamment de polymères et copolymères de l'éthylène et du propylène haute ou basse densité. On pourrait également, sans sortir du cadre de la présente invention, faire appel à des polyionomères constitués par des polymères de l'éthylène présentant des groupes carboxylates métalliques tels que ceux vendus sous la marque commerciale SURLYN A.

Les exemples qui suivent illustrent l'invention et montrent comment elle peut être mise en pratique. Dans les exemples, les tests dont la description suit ont été utilisés.

### 1°) Mesure du retrait à chaud

Des éprouvettes circulaires de diamètre 100 mm sont découpées dans un film polyester après repérage des sens de l'étirage transversal et de l'étirage longitudinal du film. Les éprouvettes sont ensuite portée à $200°C$ pendant 30 mn dans une étuve ventilée thermostatée. Après refroidissement, les diamètres des éprouvettes sont déterminés dans le sens transversal (DT) et dans le sens longitudinal (DL) au moyen d'un bloc de mesure constitué par une échelle de mesure graduée par 0,1 mm gravée sur une plaque de verre éclairée et par une lunette de visée. Le retrait est exprimé et calculé au moyen des formules :

RT = 100 - DT
RL = 100 - DL

2°) Mesure de la force de délaminage

A la sortie du dispositif d'extrusion-couchage on prélève au centre de la laize des échantillons de films composites 30 cm x 1 cm de façon à ce que leur longueur soit parallèle à l'axe longitudinal du film. Une amorce de délaminage est immédiatement réalisée sur une longueur de 4 cm de façon à séparer la ou les couches de revêtement du film polyester. Les échantillons sont ensuite conservés pendant une durée suffisante pour permettre la réticulation de l'adhésif et par conséquent sa prise optimale. La force de délaminage est ensuite mesurée par introduction des amorces dans les machoires d'un dynamomètre de marque commerciale INSTRON, la vitesse de délaminage étant de 200 m/mn. L'appareil réalise un enregistrement graphique de la force nécessaire à la séparation des couches au cours du délaminage. La force de délaminage est exprimée en g/cm.

Dans les exemples ci-après, la mesure du $\Delta P$, du retrait et de la force de délaminage ont toujours été effectuées dans la même zone de la largeur de la laize du film (au centre) pour éviter les variations qui pourraient être dues aux légères irrégularités d'épaisseur ou de propriétés d'un bord à l'autre de la laize.

EXEMPLE 1:

1°) Préparation du film polyester support

On a procédé à l'extrusion sous forme d'un film amorphe de façon connue d'un polyteréphtalate d'éthylèneglycol (PET) de viscosité intrinsèque égale à 0,62 dl/g et contenant 0,07 % en poids de particules de silice de diamètre médian 1 $\mu$ (marque commerciale SYLOID) et 0,04 % en poids de particules de carbonate de calcium de diamètre médian 0,7 $\mu$m avec un débit de 1000 kg/h. Le film amorphe est refroidi à 30°C sur un tambour de refroidissement puis étiré d'abord dans le sens longitudinal à un taux de 3,5 % à 110°C, ensuite dans le sens transversal à un taux de 4,05 et à une température allant de 115°C (début d'étirage) à 120°C (fin d'étirage). Le film biétiré est ensuite soumis à un thermofixation dans un four dont les trois zones sont portées respectivement à 200°C, 230°C et 235°C ; la durée du traitement thermique étant au total de 3 secondes ; puis à une relaxation travers provoquant une diminution totale de sa largeur de 3 %. Cette relaxation a été réalisée en 2 secondes lors du refroidissement du film.

On obtient de cette façon avec une vitesse de 190 m/mn un film PET présentant les caractéristiques suivantes :

| - épaisseur | 12 $\mu$m |
| - $\Delta p$ | $165 \times 10^{-3}$ |
| - retrait travers 200°C | 2,6 % |

2°) Préparation d'un film composite

En utilisant un appareillage usuel d'extrusion couchage de polyéthylène (PE) sur un support, analogue à celui représenté schématiquement dans Encyclopedia of chemical Technology Vol. 10 page 238 3ème Edition, on a procédé à l'extrusion-couchage d'un polyéthylène basse densité(d = 0,915) ayant une température de fusion de 290 à 335°C. La nappe de polyéthylène extrudé sortant de la filière à une température de 305°C et à une vitesse de 130 m/mn est mise en contact à proximité du tambour de refroidissement avec le film polyester obtenu précédemment sur lequel on a déposé par enduction, après traitement corona, une primaire d'adhérence vendu sous la marque commerciale ADCOTE 329 par la société MORTON. Le film polyester est ensuite séché pour évaporer le solvant et préchauffé à 70°C. Le film composite monocouche ainsi obtenu est bobiné après découpage des lisières puis stocké à 20°C pendant 5 jours pour permettre la prise de l'adhésif. L'autre face du film composite est alors soumise à une deuxième phase d'extrusion-couchage dans les mêmes conditions. On obtient de cette façon un film composite PE/PET/PE dans lequel les couches PE ont une épaisseur de 25 $\mu$m.

La détermination de la force de délaminage sur des éprouvettes préparées comme il a été décrit ci-avant a donné les valeurs suivantes :
-   Force de délaminage moyenne : 200 g/cm pour chaque face
-   Variation de la force de délaminage : ± 15 % de part et d'autre de la force de délaminage moyenne

A titre comparatif on a préparé un film PET présentant un $\Delta p = 164 \times 10^{-3}$ et un taux de retrait travers à 200°C de 4 % dans les conditions de l'exemple décrit ci-avant, la température de la 3ème zone de thermofixation étant de 230°C et le taux de relaxation travers de 2,5 %. Les films composites PE/PET/PE obtenus comme précédemment presentent une force moyenne de délaminage de la deuxième face de 100 g/cm et une fluctutation de ± 50 % de cette valeur de part et d'autre de la valeur moyenne.

EXEMPLES 2 et 3

On a préparé des films PET en opérant comme à l'exemple 1 dans les conditions consignées dans le tableau suivant, puis des films composites PE/PET/PE sur lesquels les forces de délaminage ont été déterminées. Les résultats obtenus figurent dans le tableau ci-après.

TABLEAU

| EX | TEL % (1) | TET % (2) | θ THERMOFIXATION °C | | | Taux relaxation travers | Δρ | Retrait travers à 200°C % | Fd (3) g/cm | ΛFd (4) % |
|---|---|---|---|---|---|---|---|---|---|---|
| | | | 1ère zone | 2ème zone | 3ème zone | | | | | |
| 2 | 3,35 | 3,9 | 200 | 230 | 235 | 3,5 | $167 \times 10^{-3}$ | 1,7 | 250 | ± 5 |
| 3 | 3,5 | 4,05 | 200 | 230 | 235 | 4 % | $165 \times 10^{-3}$ | 1,7 | 200 | ± 5 |

1) taux d'étirage en long

2) "      "      travers

3) force de dilaminage moyenne de chaque face

4) fluctuation de la force de délaminage sur chaque face

## Revendications

**1.** Procédé d'obtention de films composites constitués par un film polyester semi-cristallin orienté support comportant sur au moins une de ses faces une couche de polymère oléfinique, caractérisé en ce que l'on dépose par extrusion couchage un film dudit polymère oléfinique sur au moins une face d'un films polyester semi-cristallin orienté présentant un coefficient d'orientation planaire Δp supérieur ou égal à 165 x 10$^{-3}$ et un taux de retrait travers inférieur ou égal à 2,7 % à 200 °C.

2. Procédé selon la revendication 1, caractérisé en ce que le film support présente une épaisseur comprise entre 5 et 50 μm.

3. Procédé selon l'une quelconque des revendications 1 à 2, caractérisé en ce que le film support est constitué par un polyester comportant au moins 80 % en moles de motifs téréphtalates d'alkylèneglycol.

4. Procédé selon l'une quelconque des revendications 1 à 3, caractérisé en ce que l'épaisseur de la couche de polymère oléfinique est comprise entre 5 et 40 μm.

5. Procédé selon l'une quelconque des revendications 1 à 4, caractérisé en ce que le polymère oléfinique est le polyéthylène.

## Claims

1. Process for obtaining composite films consisting of an oriented semicrystalline polyester base film carrying, on at least one of its faces, a layer of olefin polymer, characterized in that a film of the said olefin polymer is deposited by extrusion coating on at least one face of an oriented semicrystalline polyester film which has a planar orientation coefficient Δp of greater than or equal to 165 × 10$^{-3}$ and a transverse shrinkage ratio of less than or equal to 2.7 % at 200 °C.

2. Process according to Claim 1, characterized in that the base film has a thickness of between 5 and 50 μm.

3. Process according to either of claims 1 and 2, characterized in that the base film consists of a polyester containing at least 80 mol % of alkylene glycol terephthalate units.

4. Process according to any one of claims 1 to 3, characterized in that the thickness of the olefin polymer layer is between 5 and 40 μm.

5. Process according to any one of claims 1 to 4, characterized in that the olefin polymer is polyethylene.

## Patentansprüche

1. Verfahren zur Herstellung von Verbundfilmen aus einem orientierten, semikristallinen Polyesterfilmträger, umfassend auf mindestens einer seiner Seiten eine olefinische Polymerschicht, dadurch gekennzeichnet, daß man durch Extrusionsbeschichtung einen Film des olefinischen Polymeren auf mindestens einer Seite eines orientierten, semikristallinen Polyesterfilms mit einem planaren Orientierungskoeffizienten Δp von größer oder gleich 165 x 10$^{-3}$ und einem querverlaufenden Schrumpfungsgrad von kleiner oder gleich 2,7 % bei 200 °C aufbringt.

2. Verfahren nach Anspruch 1, dadurch gekennzeichnet, daß der Filmträger eine Dicke zwischen 5 und 50 μm besitzt.

3. Verfahren nach einem der Ansprüche 1 bis 2, dadurch gekennzeichnet, daß der Filmträger aus einem Polyester mit mindestens 80 mol-% Alkylenglykolterephthalateinheiten besteht.

4. Verfahren nach einem der Ansprüche 1 bis 3, dadurch gekennzeichnet, daß die Dicke der olefinischen Polymerschicht zwischen 5 und 40 μm beträgt.

5. Verfahren nach einem der Ansprüche 1 bis 4, dadurch gekennzeichnet, daß das olefinische Polymere Polyethylen ist.